# EUROPEAN PATENT APPLICATION

(11) **EP 4 131 476 A1**
(43) Date of publication of application: **08.02.2023**
(21) Application number: 20926545.3
(22) Date of filing: 25.03.2020
(51) Int. Cl.: H01M 4/134, H01M 4/62, H01M 10/0525

(54) **ELECTRODE ASSEMBLY, ELECTROCHEMICAL DEVICE AND ELECTRONIC DEVICE**

(71) Applicant: Ningde Amperex Technology Limited, Ningde, Fujian 352100 (CN)
(72) Inventor: LI, Daguang, Ningde, Fujian 352100 (CN); CHEN, Maohua, Ningde, Fujian 352100 (CN); XIE, Yuansen, Ningde, Fujian 352100 (CN)
(74) Representative: Icosa
(86) International application number: PCT/CN2020/081048
(87) International publication number: WO 2021/189285

(57) **Abstract**

The present disclosure provides an electrode assembly, an electrochemical device, and an electronic device. The electrode assembly includes: an electrolytic solution, where the electrolytic solution includes a solvent and an additive, the additive includes fluoroethylene carbonate, and a weight percent of the fluoroethylene carbonate in a total mass of the solvent and the additive is 10% to 30%; and a negative electrode, where the negative electrode contains an active material and a protection layer that covers the active material. The protection layer is located between the electrolytic solution and the active material, the protection layer is in contact with the electrolytic solution, the active material contains lithium metal, and the protection layer contains silicon. The electrode assembly disclosed in the present disclosure can greatly improve the cycle performance of a lithium metal battery.

## Description

### TECHNICAL FIELD

The present disclosure relates to the technical field of electrochemistry, and in particular, to an electrode assembly, an electrochemical device, and an electronic device.

### BACKGROUND

Among all metal elements, lithium metal is a metal with the smallest relative atomic mass (6.94) and the lowest standard electrode potential (-3.045 V). A theoretical gram capacity of the lithium metal is up to 3860 mAh/g. Therefore, the lithium metal used as a negative electrode of the battery in conjunction with some positive materials of a high energy density can greatly increase the energy density and working voltage of the battery.

However, existing lithium metal batteries exhibit the following problems: 1) the lithium metal is extremely active. Especially, freshly generated lithium metal is very prone to incur a series of side reactions with an existing organic small-molecule electrolytic solution system. Consequently, the lithium metal and the electrolytic solution are consumed simultaneously, and cycle Coulombic efficiency in a conventional liquid-state electrolytic solution system is usually less than 90%, being much lower than that (99% to 99.9%) in a general graphite negative electrode system; and 2) during charging of the lithium metal battery, lithium is prone to deposit on a surface of a negative current collector. Due to non-uniformity of a current density and a lithium ion concentration in the electrolytic solution, the deposition at some sites is excessively quick during the deposition, thereby producing sharp dendrite structures. The lithium dendrites are prone to pierce a separator and cause a short circuit between a positive electrode and a negative electrode, and give rise to safety hazards. In addition, the existence of the lithium dendrites decreases a deposition density greatly. A true density of the lithium metal is approximately 0.534 g/cc, but the deposition density of the lithium metal is merely up to approximately 0.2 g/cc, thereby reducing the energy density of the lithium metal battery by more than 100 Wh/L.

### SUMMARY

In view of the disadvantages of the prior art, an objective of the present disclosure is to improve at least the cycle performance of lithium metal batteries.

The present disclosure provides an electrode assembly, including:
an electrolytic solution, where the electrolytic solution includes a solvent and an additive, the additive includes fluoroethylene carbonate, and a weight percent of the fluoroethylene carbonate in a total mass of the solvent and the additive is 10% to 30%; and
a negative electrode, where the negative electrode contains an active material and a protection layer that covers the active material, the protection layer is located between the electrolytic solution and the active material, the protection layer is in contact with the electrolytic solution, the active material contains lithium metal, and the protection layer contains silicon.

In the electrode assembly above, a thickness of the protection layer is 0.001 µm to 100 µm.

In the electrode assembly above, the active material includes at least one of simple-substance lithium metal or a composite material containing lithium metal.

In the electrode assembly above, in the active material and the protection layer, a volume ratio between lithium and silicon is greater than 10: 1.

In the electrode assembly above, the protection layer includes at least one of a silicon-containing alloy SiM_{y} or a silicon-oxygen compound, where, y < 0.05, and M is at least one of B, Al, P, Fe, Co, Ni, Zn, Ge, Ga, As, Zr, In, or Sn.

In the electrode assembly above, the solvent includes at least one of cyclic ester or chain ester.

The cyclic ester includes at least one of ethylene carbonate, propylene carbonate, γ-butyrolactone, ethylene carbonate substituted by a fluorine-containing group, propylene carbonate substituted by a fluorine-containing group, or butylene carbonate.

The chain ester includes at least one of dimethyl carbonate, diethyl carbonate, ethyl methyl carbonate, methyl formate, ethyl formate, ethyl acetate, ethyl propionate, propyl propionate, methyl propionate, methyl butyrate, ethyl butyrate, fluoroethyl methyl carbonate, fluorodimethyl carbonate, diethyl fluorocarbonate, ethyl fluoropropionate, propyl fluoropropionate, methyl fluoropropionate, ethyl fluoroacetate, methyl fluoroacetate, or propyl fluoroacetate.

In the electrode assembly above, the electrolytic solution further includes vinylene carbonate.

In the electrode assembly above, the electrode assembly further includes a positive electrode and a separator, and the separator is disposed between the positive electrode and the negative electrode.

The present disclosure further provides an electrochemical device, including any one of the electrode assemblies disclosed above.

The present disclosure further provides an electronic device, including the electrochemical device.

In the electrode assembly according to embodiments of the present disclosure, by forming a silicon-containing protection layer on the surface of the active material, non-uniformity of the surface of the lithium metal is alleviated, and the lithium metal is obstructed from direct contact with the electrolytic solution, thereby improving the deposition morphology, suppressing side reactions between the lithium metal and the electrolytic solution, suppressing growth of lithium dendrites, and improving safety. In addition, a stable SEI (solid electrolyte interface, solid electrolyte interface) film is formed on the surface of the silicon-containing protection layer by using a fluorine-containing electrolytic solution of a given concentration, thereby solving the problem of unstable film formation of the silicon-containing protection layer in the electrolytic solution, and in turn, improving the cycle performance of the electrode assembly.

### BRIEF DESCRIPTION OF DRAWINGS

The foregoing and other features, advantages, and aspects of embodiments of the present disclosure become more apparent with reference to the drawings and the following specific implementations. Throughout the drawings, identical or similar reference numerals represent identical or similar elements. Understandably, the drawings are merely illustrative, and components and elements are not necessarily drawn to scale.
FIG. 1 is a schematic structural diagram of a negative electrode in an electrode assembly according to an embodiment of the present disclosure;
FIG. 2 is a side view of a negative electrode according to an embodiment of the present disclosure; and
FIG. 3 is a top view of a negative electrode according to an embodiment of the present disclosure.

### DETAILED DESCRIPTION OF EMBODIMENTS

The following describes embodiments of the present disclosure in more detail with reference to drawings. Understandably, although some embodiments of the present disclosure are shown in the drawings, the present disclosure may be implemented in various forms without being construed as being limited to the embodiments set forth herein. The embodiments provided herein are intended to enable a more thorough and comprehensive understanding of the present disclosure. Understandably, the drawings and embodiments of the present disclosure are merely intended as examples, but not intended to limit the protection scope of the present disclosure.

The following embodiments enable a person skilled in the art to understand this application more comprehensively, but without limiting this application in any way.

The following describes solutions of the embodiments of this application in detail with reference to the drawings.

A lithium metal battery uses lithium metal as a negative electrode. Existing lithium metal batteries exhibit the following problems:
1) The lithium metal is extremely active, and a potential of the lithium metal relative to a standard hydrogen electrode is -3.05 V Due to absence of a passivation layer on the surface of the lithium metal, freshly generated lithium metal is very prone to a series of side reactions with an electrolytic solution system, for example, reacting with a trace amount of hydrogen fluoride in the electrolytic solution to generate lithium fluoride, or reacting with an electrolyte solvent propylene carbonate to generate propylene carbonate lithium C₃H₆OCO₂Li, thereby leading to consumption of both the lithium metal and the electrolytic solution, and making the cycle Coulombic efficiency be much lower than that of the graphite negative electrode (99% to 99.9%).
2) During charging of the lithium metal battery, lithium is deposited on the surface of a negative current collector. Due to non-uniformity of the current density and the lithium ion concentration in the electrolytic solution, the deposition at some sites is excessively quick during the deposition, thereby producing sharp dendrite structures. The lithium dendrites are prone to pierce a separator and cause a short circuit, and give rise to safety hazards. The existence of the lithium dendrites decreases the deposition density greatly, and in turn, decreases the energy density. In some lithium metal batteries, an actual deposition density of the lithium metal is approximately 0.2 g/cc, much lower than 0.534 g/cc that is a true density of the lithium metal. Due to the loose deposition of the lithium metal, the energy density decreases by more than 100 Wh/L.
3) In order to reduce the reactions between the lithium metal and the electrolytic solution and suppress the growth of lithium dendrites, a protection layer made of a silicon material may be prepared on the surface of a lithium metal negative electrode. The negative electrode of the silicon material can prevent side reactions between the electrolytic solution and the lithium metal electrode plate, and suppress the growth of dendrites significantly. However, the silicon or silicon alloy poorly matches the conventional electrolytic solution. The silicon-containing material can hardly form a stable SEI (solid electrolyte interface, solid electrolyte interface) film in a conventional electrolytic solution. The SEI film keeps being ruptured and formed repeatedly when the cycles of the lithium metal battery go on, thereby accelerating the consumption of the electrolytic solution and lithium metal, and resulting in poor cycle performance of the lithium metal battery.

From the description above, it is evident that in the technical solution that uses a silicon protection layer to prevent contact between the electrolytic solution and the lithium metal, due to mismatch between the electrolytic solution and the silicon protection layer, the electrolytic solution and lithium metal are quickly consumed, thereby leading to a significant decline in the cycle performance of the lithium metal battery.

In some embodiments of the present disclosure, an electrode assembly is disclosed. The electrode assembly may be a lithium metal battery.

In some embodiments of the present disclosure, the electrode assembly includes an electrolytic solution and a negative electrode, and may further include a positive electrode.

The electrolytic solution includes a solvent and an additive. The additive includes fluoroethylene carbonate (FEC). A weight percent of the fluoroethylene carbonate in a total mass of the solvent and the additive is 10% to 30%. In some embodiments of the present disclosure, the additive may include the fluoroethylene carbonate alone.

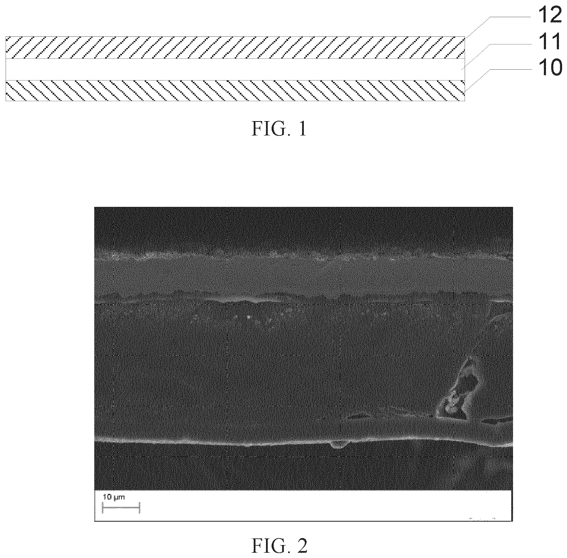

Referring to FIG. 1, the negative electrode contains an active material 11 and a protection layer 12 that covers the active material 11. In some embodiments of the present disclosure, the active material 11 is located on one side or both sides of a current collector 10. The current collector 10 may be a copper foil.

The protection layer 12 is located between the electrolytic solution and the active material 11. The protection layer 12 is in contact with the electrolytic solution. The active material contains lithium metal, and the protection layer contains silicon.

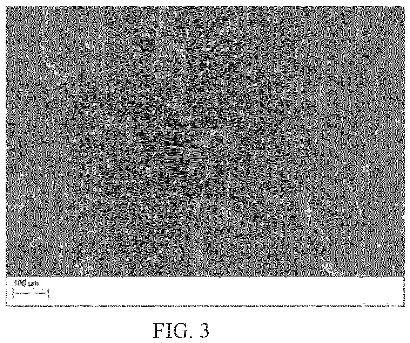

In some embodiments of the present disclosure, the silicon-containing protection layer is disposed on the active material 11. In some embodiments of the present disclosure, by means of chemical vapor deposition, physical vapor deposition, or atomic layer deposition, the silicon material may be deposited on the surface of the lithium metal to form a protection layer. The silicon and the lithium metal spontaneously react to form a lithium-silicon alloy. The reaction equation is: Si + xLi → LiₓSi, where 1 ≤ x ≤ 5. FIG. 2 and FIG. 3 show a side view and a top view, respectively, of a negative electrode according to some embodiments of the present disclosure.

A large amount of unevenly distributed impurities exists on the surface of untreated lithium metal, including lithium oxide Li₂O, lithium hydroxide LiOH, lithium carbonate Li₂CO₃, and the like. This may lead to uneven distribution of a surface current of the electrode plate during cycling, and in turn, lead to uneven nucleation of the lithium metal, promote the growth of lithium dendrites, deteriorate the deposition morphology, and cause a decline in the rate performance, safety performance, and cycle performance of the battery. In some embodiments of the present disclosure, by disposing a silicon-containing protection layer, the electrolytic solution is prevented from contacting the lithium metal in the negative electrode, thereby suppressing the side reactions between the lithium metal and the electrolytic solution. In addition, the protection layer can improve the uniformity of distribution of the surface current of the electrode plate during cycles, provide a uniform and good path for lithium ion transport during deposition and dissociation, and in turn, prevent non-uniform deposition of lithium ions, suppress growth of lithium dendrite, and improve the rate performance, safety performance, and cycle performance of the battery.

The conventional electrolytic solution poorly matches the silicon-containing protection layer, and can hardly form a stable SEI film. In the conventional electrolytic solution, initially, the main components on the surface of the negative electrode are lithium ethylene dicarbonate (LEDC) and LiF generated by the decomposition of ethylene carbonate (EC). The LEDC is an unstable component, and gradually transforms into an inorganic component during cycles of the electrode assembly and releases gas, thereby making the components of the SEI film change continuously and become loose and porous. In this way, the electrolytic solution keeps reacting with the negative electrode. When this process goes on, the SEI film keeps thickening until the film is impenetrable to the lithium ions. In addition, this consumes the lithium ions in the electrolytic solution drastically, and results in a severe decline in the cycle performance of the battery. To make the protection layer work effectively and improve the cycle performance of the battery, it is necessary to form a dense and stable SEI film on the surface of the protection layer. Therefore, in some embodiments of the present disclosure, the electrolytic solution contains FEC. The FEC can form a vinylene carbonate (VC) molecule by losing one hydrogen fluoride HF molecule based on the following reaction equation: FEC → VC + ROH + LiF. Due to a lowest unoccupied molecular orbital of the VC and FEC, by precedence over the solvent of the electrolytic solution, the VC and FEC can be reduced and decomposed as soon as they get in contact with the negative electrode, and generate, on the surface of the negative electrode, an SEI layer containing a relatively high content of inorganic component, so as to suppress decomposition of the solvent in the electrolytic solution. Moreover, the VC serves as a film-forming additive, and the components of the SEI film change after the VC is added, thereby generating a polyalkyl lithium carbonate polymer to increase flexibility and adhesion of the SEI film. In addition, the LiF generated by the decomposition of the FEC can further exert an effect of bonding the silicon-containing protection layer to the SEI film, reduce microcracks generated, and in turn, improve stability of the protection layer and the SEI film, and improve the cycle performance of the battery. In contrast, the main components of the SEI film formed in the conventional electrolytic solution are inorganic lithium salts and a small amount of alkyl lithium, so that the LEI film is of low flexibility. In this embodiment, the FEC-added electrolytic solution is more facilitated to form a stable SEI film on the surface of the protection layer, so as to prevent the SEI film from being repeatedly ruptured and regenerated during cycles.

However, the FEC is not stable on the positive electrode, and is prone to react with the positive electrode to produce gas. Therefore, the concentration of the FEC in the electrolytic solution needs to be controlled. When the weight percent of the FEC in the total mass of the solvent and the additive exceeds 30%, the FEC reacts with the positive electrode, the produced gas increases, and the cycle performance of the electrode assembly declines. When the weight percent of the FEC in the total mass of the solvent and the additive is less than 10%, the concentration of the FEC is low, the chemical reaction between the electrolytic solution and the protection layer is weak, the effect of forming the SEI film is poor, and therefore, the cycle performance of the electrode assembly cannot be significantly improved. Therefore, in the electrode assembly in some embodiments of the present disclosure, the weight percent of the FEC in the total mass of the solvent and the additive is controlled to be 10% to 30%. In this way, on the basis of ensuring the effect of forming the SEI film, the gassing caused by the reaction between the FEC and the positive electrode is suppressed, and therefore, the cycle performance of the electrode assembly can be significantly improved.

To sum up, in some embodiments of the present disclosure, a silicon-containing protection layer is disposed on the surface of the active material to prevent side reactions between the lithium metal and the electrolytic solution, and suppress the growth of lithium dendrites. The FEC is added into the electrolytic solution to increase stability of the SEI film, and prevent the SEI film from rupturing and growing repeatedly during cycles. The concentration of the FEC is controlled to suppress the gassing on the basis of ensuring the quality of the SEI film, and in turn, improve the cycle performance of the electrode assembly.

In some embodiments of the present invention, the thickness of the protection layer is 0.001 µm to 100 µm. When the protection layer is excessively thin, the SEI film formed on the protection layer is relatively thin, and therefore, is instable and prone to be ruptured and generated repeatedly during cycles, thereby consuming the electrolytic solution and lithium metal. However, when the protection layer is excessively thick, the lithium metal can hardly pass through the protection layer, thereby increasing the resistance and deteriorating the performance of the electrode assembly. Therefore, in some embodiments of the present disclosure, the thickness of the protection layer is controlled to be 0.001 µm to 100 µm.

In some embodiments of the present disclosure, the active material includes at least one of simple-substance lithium metal or a composite material containing lithium metal. In some embodiments of the present disclosure, the negative electrode of the electrode assembly is lithium metal. The lithium metal is of high chemical activity. By using a composite material containing the lithium metal, the chemical reactions between the lithium metal and the external environment can be reduced. In some embodiments of the present disclosure, the simple-substance lithium metal and/or the composite material containing the lithium metal may be powder or a thin film.

In some embodiments of the present disclosure, in the active material and the protection layer, a volume ratio between lithium and silicon is greater than 10: 1. The volume ratio between lithium and silicon is a ratio of the content of lithium to the content of silicon. When the volume ratio between lithium and silicon is less than 10: 1, the content of silicon is excessive and leads to an increase in resistance and a decline in capacity.

In some embodiments of the present disclosure, the protection layer includes at least one of a silicon-containing alloy SiM_{y} or a silicon-oxygen compound, where, y < 0.05, and M is at least one of B, Al, P, Fe, Co, Ni, Zn, Ge, Ga, As, Zr, In, or Sn. The protection layer needs to be able to transport lithium ions but not electronically conductive. The excessive content of M is prone to increase the metallicity of the protection layer. The increase of the metallicity increases in the electronic conductivity of the protection layer. Therefore, the content of M in the silicon alloy needs to be restricted. In some embodiments of the present disclosure, the silicon-oxygen compound may be SiOₓ, where x may be 0 to 2. The silicon-oxygen compound is cost-efficient and not electronically conductive.

In some embodiments of the present disclosure, the solvent includes at least one of cyclic ester or chain ester. The cyclic ester includes at least one of ethylene carbonate, propylene carbonate, γ-butyrolactone, ethylene carbonate substituted by a fluorine-containing group, propylene carbonate substituted by a fluorine-containing group, or butylene carbonate. The chain ester includes at least one of dimethyl carbonate, diethyl carbonate, ethyl methyl carbonate, methyl formate, ethyl formate, ethyl acetate, ethyl propionate, propyl propionate, methyl propionate, methyl butyrate, ethyl butyrate, fluoroethyl methyl carbonate, fluorodimethyl carbonate, diethyl fluorocarbonate, ethyl fluoropropionate, propyl fluoropropionate, methyl fluoropropionate, ethyl fluoroacetate, methyl fluoroacetate, or propyl fluoroacetate.

In some embodiments of the present disclosure, the electrolytic solution further contains vinylene carbonate (VC). Due to a lowest unoccupied molecular orbital of the vinylene carbonate, by precedence over the solvent in the electrolytic solution, the vinylene carbonate can be reduced and decomposed as soon as it gets in contact with the negative electrode, and generate, on the surface of the negative electrode, an SEI layer containing a relatively high content of inorganic component, so as to suppress decomposition of the solvent in the electrolytic solution. Moreover, the VC serves as a film-forming additive, and the components of the SEI film change after the VC is added, thereby generating a polyalkyl lithium carbonate polymer to increase flexibility and adhesion of the SEI film.

In some embodiments of the present disclosure, the electrolytic solution further includes a salt. The salt may be one of an organic salt or an inorganic salt. The salt may include at least one of a lithium salt, a sodium salt, or a potassium salt. The salt may contain at least one of fluorine, boron, or phosphorus. In some embodiments of the present disclosure, the lithium salt includes at least one of lithium hexafluorophosphate LiPF₆, lithium bis(trifluoromethanesulfonyl)imide LiN(CF₃SO₂)₂, lithium bis(fluorosulfonyl)imide Li(N(SO₂F)₂, lithium bis(oxalato)borate LiB(C₂O₄)₂, lithium difluoro(oxalato)borate LiBF₂(C₂O₄), lithium hexafluoroarsenate LiAsF₆, lithium perchlorate LiClO₄, or lithium trifluoromethanesulfonate LiCF₃SO₃.

In some embodiments of the present disclosure, the electrode assembly further includes a positive electrode and a separator. The separator is disposed between the positive electrode and the negative electrode. In some embodiments of the present disclosure, the positive electrode plate may include a positive current collector and a positive active material layer applied on the positive current collector. The positive electrode contains a positive active material layer. The positive active material layer may be applied on just a part of the positive current collector. The positive active material layer may include a positive active material, a conductive agent, and a binder. The positive current collector may be an aluminum foil, or may be another positive current collector commonly used in the art. The conductive agent of the positive electrode plate may include at least one of conductive carbon black, graphite flakes, graphene, or carbon nanotubes. The binder in the positive electrode plate may include at least one of polyvinylidene fluoride, a vinylidene fluoride-hexafluoropropylene copolymer, a styrene-acrylate copolymer, styrene-butadiene copolymer, polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, poly methyl methacrylate, polytetrafluoroethylene, or polyhexafluoropropylene. The positive active material includes, but is not limited to, at least one of lithium cobaltate, lithium nickelate, lithium manganate, lithium nickel manganate, lithium nickel cobaltate, lithium iron phosphate, lithium nickel cobalt aluminate, or lithium nickel cobalt manganate. The foregoing positive active materials may include doped or coated positive active materials.

In some embodiments of the present disclosure, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and can improve stability of the battery through a turn-off effect.

In some embodiments of the present disclosure, a surface of the separator may further include a porous layer. The porous layer is disposed on at least one surface of the separator. The porous layer includes inorganic particles and a binder. The inorganic particles are at least one selected from aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, or barium sulfate. The binder is selected from at least one of polyvinylidene fluoride, a vinylidene fluoride-hexafluoropropylene copolymer, a polyamide, polyacrylonitrile, polyacrylic ester, polyacrylic acid, sodium polyacrylate, sodium carboxymethyl cellulose, polyvinylpyrrolidone, polyvinyl ether, poly methyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of the present disclosure, the electrode assembly of the electrochemical device is a jelly-roll electrode assembly or a stacked electrode assembly.

The present disclosure further discloses an electrochemical device, including any one of the electrode assemblies disclosed above. In some embodiments of the present disclosure, the electrochemical device includes, but is not limited to, a lithium metal battery.

The present disclosure further discloses an electronic device, including the foregoing electrochemical device. In some embodiments of the present disclosure, the electronic device may include any electronic device that uses a rechargeable battery, such as a mobile phone, a tablet computer, or the like.

Some specific embodiments and comparative embodiments are enumerated below to describe the present disclosure more comprehensively.

In the following Embodiments 1 to 6 and Comparative Embodiments 1 to 9 of the present disclosure, a lithium metal battery is used as an example. The raw materials for preparing the lithium-ion battery, the weight ratio between the raw materials, and the preparation method, and the like are merely examples. The present disclosure does not limit the raw materials, the weight ratio between the raw materials, or the preparation method used in the following examples.

### Embodiment 1

Preparing a negative electrode plate: Electrodepositing silicon onto a lithium metal electrode plate by magnetron sputtering, so as to form a silicon-containing protection layer that is approximately 1 µm thick. Cutting the lithium metal electrode plate into a (40 mm × 60 mm) size ready for use.

Preparing a positive electrode plate: Mixing lithium cobalt oxide (LiCoO₂) as a positive active material, conductive carbon black (super P), and polyvinylidene difluoride (PVDF) at a weight ratio of 97.5: 1.0: 1.5, adding N-methyl pyrrolidone (NMP) as a solvent, blending the mixture into a slurry with a solid content of 75 wt%, and stirring the slurry evenly. Coating a positive current collector aluminum foil with the slurry evenly, and drying under 90 °C to obtain a positive electrode plate. After completion of the coating, cutting the electrode plate into a size of 38 mm × 58 mm ready for use.

Preparing an electrolytic solution: Mixing ethylene carbonate (EC), and diethyl carbonate (DEC) at a weight ratio of 1: 1 between EC and DEC in an dry argon atmosphere to make an organic solvent, then adding a lithium salt hexafluorophosphate (LiPF₆) into the organic solvent to dissolve, and mixing the solution evenly to obtain an electrolytic solution in which the lithium salt concentration is 1.0 mol/L.

Preparing a lithium-ion battery: Using 15-pm-thick polyethylene (PE) as a separator, and disposing the separator between the positive electrode plate and the negative electrode plate that are located on an upper layer and a lower layer respectively. Stacking the electrode plates and the separator neatly, fixing four corners of the entire stacked structure by using adhesive tape, and then placing the stacked structure into an aluminum plastic film package. Performing top-and-side sealing, injecting an electrolytic solution, and sealing the package to finally obtain a stacked-type lithium metal battery.

### Embodiment 2

Embodiment 2 differs from Embodiment 1 in the preparation of the electrolytic solution. In Embodiment 2, the method for preparing the electrolytic solution is: Mixing ethylene carbonate (EC), diethyl carbonate (DEC), and vinylene carbonate (VC) at a weight ratio of 40: 40: 20 between EC, DEC, and VC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Embodiment 3

Embodiment 3 differs from Embodiment 1 in the preparation of the electrolytic solution. In Embodiment 3, the method for preparing the electrolytic solution is: Mixing ethylene carbonate (EC), diethyl carbonate (DEC), and fluoroethylene carbonate (FEC) at a weight ratio of 40: 40: 20 between EC, DEC, and FEC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Embodiment 4

Embodiment 4 differs from Embodiment 1 in the preparation of the negative electrode plate and the electrolytic solution. In Embodiment 4, the preparation methods are as follows:

Preparing a negative electrode plate: Using silicon as a target material, using oxygen as a process gas, and electrodepositing SiOₓ onto a lithium metal electrode plate by magnetron sputtering, so as to form a SiOₓ protection layer that is approximately 1 µm thick. Cutting the lithium metal electrode plate into a size of 40 mm × 60 mm ready for use.

Preparing an electrolytic solution: Mixing ethylene carbonate (EC), and diethyl carbonate (DEC) at a weight ratio of 1: 1 between EC and DEC in an dry argon atmosphere to make an organic solvent, then adding a lithium salt hexafluorophosphate (LiPF₆) into the organic solvent to dissolve, and mixing the solution evenly to obtain an electrolytic solution in which the lithium salt concentration is 1.0 mol/L.

### Embodiment 5

Embodiment 5 differs from Embodiment 4 in the preparation of the electrolytic solution. In Embodiment 5, the method for preparing the electrolytic solution is: Mixing ethylene carbonate (EC), diethyl carbonate (DEC), and vinylene carbonate (VC) at a weight ratio of 40: 40: 20 between EC, DEC, and VC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Embodiment 6

Embodiment 6 differs from Embodiment 4 in the preparation of the electrolytic solution. In Embodiment 6, the method for preparing the electrolytic solution is: Mixing ethylene carbonate (EC), diethyl carbonate (DEC), and fluoroethylene carbonate (FEC) at a weight ratio of 40: 40: 20 between EC, DEC, and FEC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Comparative Embodiment 1

Comparative Embodiment 1 differs from Embodiment 1 in the preparation of the negative electrode plate. In Comparative Embodiment 1, the preparation method is as follows:

Preparing a negative electrode plate: Cutting the lithium metal electrode plate into a size of 40 mm × 60 mm ready for use.

### Comparative Embodiment 2

Comparative Embodiment 2 differs from Comparative Embodiment 1 in the preparation of the electrolytic solution. In Comparative Embodiment 2, the method for preparing the electrolytic solution is: Mixing ethylene carbonate (EC), diethyl carbonate (DEC), and fluoroethylene carbonate (FEC) at a weight ratio of 47.5: 47.5: 5 between EC, DEC, and FEC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Comparative Embodiment 3

Comparative Embodiment 3 differs from Comparative Embodiment 1 in the preparation of the electrolytic solution. In Comparative Embodiment 3, the method for preparing the electrolytic solution is: Mixing ethylene carbonate (EC), diethyl carbonate (DEC), and fluoroethylene carbonate (FEC) at a weight ratio of 45: 45: 10 between EC, DEC, and FEC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Comparative Embodiment 4

Comparative Embodiment 4 differs from Comparative Embodiment 1 in the preparation of the electrolytic solution. In Comparative Embodiment 4, the method for preparing the electrolytic solution is: Mixing ethylene carbonate (EC), diethyl carbonate (DEC), and fluoroethylene carbonate (FEC) at a weight ratio of 40: 40: 20 between EC, DEC, and FEC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Comparative Embodiment 5

Comparative Embodiment 5 differs from Comparative Embodiment 1 in the preparation of the electrolytic solution. In Comparative Embodiment 5, the method for preparing the electrolytic solution is: Mixing ethylene carbonate (EC), diethyl carbonate (DEC), and fluoroethylene carbonate (FEC) at a weight ratio of 35: 35: 30 between EC, DEC, and FEC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Comparative Embodiment 6

Comparative Embodiment 6 differs from Comparative Embodiment 1 in the preparation of the electrolytic solution. In Comparative Embodiment 6, the method for preparing the electrolytic solution is: Mixing ethylene carbonate (EC), diethyl carbonate (DEC), and fluoroethylene carbonate (FEC) at a weight ratio of 30: 30: 40 between EC, DEC, and FEC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Comparative Embodiment 7

Comparative Embodiment 7 differs from Comparative Embodiment 1 in the preparation of the electrolytic solution. In Comparative Embodiment 7, the method for preparing the electrolytic solution is: Mixing ethylene carbonate (EC), diethyl carbonate (DEC), and vinylene carbonate (VC) at a weight ratio of 45: 45: 10 between EC, DEC, and VC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Comparative Embodiment 8

Comparative Embodiment 8 differs from Comparative Embodiment 1 in the preparation of the electrolytic solution. In Comparative Embodiment 8, the method for preparing the electrolytic solution is: Mixing ethylene carbonate (EC), diethyl carbonate (DEC), and vinylene carbonate (VC) at a weight ratio of 40: 40: 20 between EC, DEC, and VC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Comparative Embodiment 9

Comparative Embodiment 9 differs from Comparative Embodiment 1 in the preparation of the electrolytic solution. In Comparative Embodiment 9, the method for preparing the electrolytic solution is: Mixing ethylene carbonate (EC), diethyl carbonate (DEC), and vinylene carbonate (VC) at a weight ratio of 35: 35: 30 between EC, DEC, and VC in an dry argon atmosphere to make an organic solvent. Adding a lithium salt hexafluorophosphate (LiPF₆) into the organic solvent to dissolve, and stirring the solution evenly to obtain an electrolytic solution in which the lithium salt concentration is 1.0 mol/L.

### Battery Performance Test

The cycle performance of the batteries prepared in Embodiments 1 to 6 and Comparative Embodiments 1 to 9 is represented by the number of cycles counted when the capacity retention rate of the full battery is less than or equal to 80%, so as to verify effectiveness of the solutions. The specific steps are as follows: Charging a full battery at a rate of 0.1 C until the voltage reaches 4.53 V, and then charging the battery at constant voltage until the current drops below 0.05 C, and then discharging the battery at a rate of 0.1 C until the voltage reaches 3 V Repeating the foregoing process for 2 times to activate the battery. Upon completion of activation, charging the battery at a rate of 0.3 C until the voltage reaches 4.53 V, and then charging the battery at a constant voltage until the current is lower than 0.05 C, and then discharging the battery at a rate of 0.5 C until the voltage reaches 3 V Repeating the foregoing charge-and-discharge process for 48 cycles, and then starting over repeatedly from the first step of activation until the battery capacity is lower than 80%. Reading the number of cycles displayed on the electrochemical test curve output by the LAND or NEWARE instrument.

Table 1 shows the cycle performance test results of Comparative Embodiments 1 to 9 and Embodiments 1 to 6 (NA means "not applicable").

**Table 1**

| | Protection layer material/thickness | Content of FEC in electrolytic solution | Content of VC in electrolytic solution | Number of cycles |
|---|---|---|---|---|
| Comparative Embodiment 1 | NA | NA | NA | 50 |
| Comparative Embodiment 2 | NA | 5% | NA | 60 |
| Comparative Embodiment 3 | NA | 10% | NA | 70 |
| Comparative Embodiment 4 | NA | 20% | NA | 120 |
| Comparative Embodiment 5 | NA | 30% | NA | 100 |
| Comparative Embodiment 6 | NA | 40% | NA | 60 |
| Comparative Embodiment 7 | NA | NA | 10% | 60 |
| Comparative Embodiment 8 | NA | NA | 20% | 100 |
| Comparative Embodiment 9 | NA | NA | 30% | 80 |
| Embodiment 1 | Si (1 µm) | NA | NA | 50 |
| Embodiment 2 | Si (1 µm) | NA | 20% | 120 |
| Embodiment 3 | Si (1 µm) | 20% | NA | 150 |
| Embodiment 4 | SiOₓ (1 µm) | NA | NA | 60 |
| Embodiment 5 | SiOₓ (1 µm) | NA | 20% | 140 |
| Embodiment 6 | SiOₓ (1 µm) | 20% | NA | 180 |

Comparative Embodiments 1 to 6 show that the FEC added in the electrolytic solution can improve the cycle performance, but the concentration of FEC in the electrolytic solution needs to be not higher than 30% because excessively concentrated FEC causes gassing on the positive electrode plate and deteriorates the cycle performance.

Comparative Embodiments 1 and 7 to 9 show that the VC added in the electrolytic solution can also improve the cycle performance, and the concentration of VC in the electrolytic solution is not higher than 30%, and preferably, is 20%. The VC-added electrolytic solution exhibits higher cycle performance than the additive-free electrolytic solution (the main component of the SEI film is LiF) because the VC additive can improve the toughness of the SEI film and make the SEI film more stable and robust during cycles.

As can be seen from the comparison results of Comparative Embodiments 1 to 9, the FEC and VC added at appropriate concentrations in the electrolytic solution can improve the cycle performance.

Referring to Embodiment 1 and Comparative Embodiment 1, in Embodiment 1, although a silicon-containing protection layer is employed, the electrolytic solution contains no FEC additive, so that the cycle performance of the battery is not significantly improved in contrast to Comparative Embodiment 1 that lacks the silicon-containing protection layer. That is because the silicon or silicon alloy can hardly form a stable solid electrolyte interface (SEI) film in an electrolytic solution that lacks the FEC. When the SEI film ruptures repeatedly during cycles, new SEI films are generated repeatedly on the surface of the exposed silicon or silicon alloy, thereby aggravating the corrosion of the silicon or silicon alloy and the consumption of the electrolytic solution. Therefore, the silicon or silicon alloy is unable to effectively protect the negative electrode in an electrolytic solution system containing no FEC, and fails to improve the cycle performance of the battery.

Referring to Embodiment 1 and Embodiment 2, in Embodiment 2, a silicon-containing protection layer is disposed, and the VC is added in the electrolytic solution. In contrast to Embodiment 1, in Embodiment 2, the VC is added at a weight percent of 20% in the electrolytic solution, and the number of cycles counted when the battery capacity drops below 80% reaches 120. That is because the SEI film generated by the VC-added electrolytic solution is tougher than that generated by the no-VC-added electrolytic solution, and is not prone to rupture during cycles.

Referring to Embodiment 2 and Comparative Embodiment 8, the VC is added at a weight percent of 20% in the electrolytic solutions of both Embodiment 2 and Comparative Embodiment 8, but the negative electrode of Comparative Embodiment 8 lacks the silicon-containing protection layer. In contrast to Comparative Embodiment 8, the number of cycles in Embodiment 2 increases by 20%, indicating that in the VC-added electrolytic solution system, the silicon or silicon alloy can effectively protect the negative electrode, that is, obstruct the side reactions from occurring between the electrolytic solution and the lithium metal, suppress the growth of dendrites, and in turn, increase the number of cycles.

Referring to Embodiment 3 and Comparative Embodiment 3, the electrolytic solutions of both Embodiment 3 and Comparative Embodiment 3 contain 20 wt% FEC. The silicon-containing protection layer exists in the negative electrode of Embodiment 3, but does not exist in the negative electrode of Comparative Embodiment 3. In contrast to Comparative Embodiment 3, the number of cycles achieved by Embodiment 3 that possesses the silicon-containing protection layer increases by 25%, because the silicon-containing protection layer suppresses the side reactions between the lithium metal and the electrolytic solution in the negative electrode.

As can be seen from the comparison results of Embodiment 2 versus Comparative Embodiment 8 and the comparison results of Embodiment 3 versus Comparative Embodiment 3, the cycle performance can be further improved by disposing both the silicon-containing protection layer and the electrolytic solution containing the VC or FEC.

Referring to Embodiment 2 and Embodiment 3, Embodiment 2 differs from Embodiment 3 in that the electrolytic solution of Embodiment 3 contains 20 wt% FEC, and the electrolytic solution of Embodiment 2 contains 20 wt% VC. The number of cycles achieved in Embodiment 3 also increases by 25% over Embodiment 2. That is because the FEC is of high reactivity, and the silicon-containing protection layer of the negative electrode completes passivation more quickly, and suppresses lithium consumption. The LiF generated by the decomposition can further exert an effect of bonding the silicon-containing protection layer of the negative electrode to the SEI film, reduce microcracks generated, and in turn, improve stability of the SEI film.

Embodiments 2 and 3 as well as Comparative Embodiments 8 and 4 all show that the FEC-added electrolytic solution is superior to the VC-added electrolytic solution in cycle performance. That is because the SEI film formed in the VC-added electrolytic solution possesses a relatively high charge transfer resistance. Consequently, the polarization generated by the negative electrode is aggravated noticeably during fast charging, thereby impairing the cycle performance of the battery.

Referring to Embodiments 4 to 6, as can be seen from the comparison results of Embodiments 4 to 6, the effect of the FEC and VC additives in improving the film formation is also applicable to a system in which the protection layer is a silicon-oxygen compound.

Referring to Embodiments 1 to 6, Embodiments 4 to 6 are superior to Embodiments 1 to 3 in cycle performance because the diffusion coefficient (10⁻⁴ to 10⁻⁸ cm²/s) of lithium in LiₓSiO_{y} is higher than the diffusion coefficient (10⁻¹² to 10⁻¹³ cm²/s) of lithium ions in LiₓSi. Therefore, the battery cycled at a high rate achieves higher cycle performance.

To sum up, among the foregoing comparative embodiments and embodiments, the optimal solution is Embodiment 6, in which the protection layer is made from a silicon-oxygen compound material, and the content of FEC in the electrolytic solution is 20%.

By introducing both the silicon-containing protection layer and the FEC-containing electrolytic solution, and by controlling the concentration of FEC within a given range, the present disclosure improves the SEI film on the surface of the protection layer on the basis of protecting the negative electrode, thereby significantly improving the cycle performance of the battery.

The foregoing descriptions are merely intended to describe preferred embodiments of the present disclosure and the technical principles thereof. A person skilled in the art understands that the disclosure scope hereof is not limited to the technical solutions formed from specific combinations of the foregoing technical features, but covers other technical solutions formed by combining the foregoing technical features or equivalents thereof in any manner without departing from the conceptions disclosed herein. For example, the disclosure scope hereof also covers the technical solutions formed by replacing any of the foregoing features with the technical features serving similar functions disclosed herein.

## Claims

1. An electrode assembly, **characterized in that** the electrode assembly comprises:
an electrolytic solution, wherein the electrolytic solution comprises a solvent and an additive, the additive comprises fluoroethylene carbonate, and a weight percent of the fluoroethylene carbonate in a total mass of the solvent and the additive is 10% to 30%; and
a negative electrode, wherein the negative electrode contains an active material and a protection layer that covers the active material, the protection layer is located between the electrolytic solution and the active material, the protection layer is in contact with the electrolytic solution, the active material contains lithium metal, and the protection layer contains silicon.

2. The electrode assembly according to claim 1, **characterized in that**
a thickness of the protection layer is 0.001 µm to 100 µm.

3. The electrode assembly according to claim 1, **characterized in that**
the active material comprises at least one of simple-substance lithium metal or a composite material containing lithium metal.

4. The electrode assembly according to claim 1, **characterized in that**
in the active material and the protection layer, a volume ratio between lithium and silicon is greater than 10: 1.

5. The electrode assembly according to claim 1, **characterized in that**
the protection layer comprises at least one of a silicon-containing alloy SiM_{y} or a silicon-oxygen compound, wherein, y < 0.05, and M is at least one of B, Al, P, Fe, Co, Ni, Zn, Ge, Ga, As, Zr, In, or Sn.

6. The electrode assembly according to claim 1, **characterized in that**
the solvent comprises at least one of cyclic ester or chain ester;
the cyclic ester comprises at least one of ethylene carbonate, propylene carbonate, γ-butyrolactone, ethylene carbonate substituted by a fluorine-containing group, propylene carbonate substituted by a fluorine-containing group, or butylene carbonate; and
the chain ester comprises at least one of dimethyl carbonate, diethyl carbonate, ethyl methyl carbonate, methyl formate, ethyl formate, ethyl acetate, ethyl propionate, propyl propionate, methyl propionate, methyl butyrate, ethyl butyrate, fluoroethyl methyl carbonate, fluorodimethyl carbonate, diethyl fluorocarbonate, ethyl fluoropropionate, propyl fluoropropionate, methyl fluoropropionate, ethyl fluoroacetate, methyl fluoroacetate, or propyl fluoroacetate.

7. The electrode assembly according to claim 1, **characterized in that** the electrolytic solution further comprises vinylene carbonate.

8. The electrode assembly according to claim 1, **characterized in that** the electrode assembly further comprises a positive electrode and a separator, and the separator is disposed between the positive electrode and the negative electrode.

9. An electrochemical device, comprising:
the electrode assembly according to any one of claims 1 to 8.

10. An electronic device, comprising the electrochemical device according to claim 9.
